(19) Europäisches Patentamt / European Patent Office / Office européen des brevets

(11) **EP 4 095 828 B1**

(12) **EUROPEAN PATENT SPECIFICATION**

(45) Date of publication and mention
of the grant of the patent:
**07.05.2025 Bulletin 2025/19**

(21) Application number: **20915352.7**

(22) Date of filing: **20.01.2020**

(51) International Patent Classification (IPC):
**G09C 1/00** *(2006.01)*        **H04L 9/10** *(2006.01)*

(52) Cooperative Patent Classification (CPC):
**H04L 9/16; H04L 9/085**

(86) International application number:
**PCT/JP2020/001676**

(87) International publication number:
**WO 2021/149100 (29.07.2021 Gazette 2021/30)**

(54) **SECURE EXPONENTIAL FUNCTION COMPUTATION SYSTEM, SECURE EXPONENTIAL FUNCTION COMPUTATION METHOD, SECURE COMPUTATION APPARATUS, AND PROGRAM**

SICHERES EXPONENTIELLES FUNKTIONSBERECHNUNGSSYSTEM, SICHERES EXPONENTIELLES FUNKTIONSBERECHNUNGSVERFAHREN, SICHERE BERECHNUNGSVORRICHTUNG UND PROGRAMM

SYSTÈME DE CALCUL DE FONCTION EXPONENTIELLE SÉCURISÉE, PROCÉDÉ DE CALCUL DE FONCTION EXPONENTIELLE SÉCURISÉE, DISPOSITIF DE CALCUL SÉCURISÉ ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.11.2022 Bulletin 2022/48**

(73) Proprietor: **Nippon Telegraph And Telephone Corporation**
**Chiyoda-ku**
**Tokyo 100-8116 (JP)**

(72) Inventor: **IKARASHI, Dai**
**Musashino-shi, Tokyo 180-8585 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**US-A1- 2016 350 648**

• IGARASHI ET AL: "Secure Real Number Operations for Secure A1 - 0(lpl)-Bit Communication and 0(1)-Round Right Shift Protocol", 14 October 2019 (2019-10-14), pages 1557 - 1564, XP009530110, Retrieved from the Internet <URL:http://id.nii.ac.jp/1001/00201419/>

• ABDELRAHAMAN ALY ET AL: "Benchmarking Privacy Preserving Scientific Operations", vol. 20190403:061423, 3 April 2019 (2019-04-03), pages 1 - 21, XP061032034, Retrieved from the Internet <URL:http://eprint.iacr.org/2019/354.pdf> [retrieved on 20190403]

• OHATA, SATSUYA: "3F1-5: Reconsidering privacy-preserving deep neural networks", PREPRINTS OF THE 2018 SYMPOSIUM ON CRYPTOGRAPHY AND INFORMATION SECURITY (SCIS2018); 23-26/01/2018, 23 January 2018 (2018-01-23), JP, pages 1 - 8, XP009530172

## Description

Technical Field

The present invention relates to a technology for computing an exponential function in secure computation.

Background Art

Secure computation is a cryptographic technology for calculating any function while hiding data. A data utilization form is expected to be developed taking advantage of this feature so that data does not leak to either a system operator or a data user. There are several schemes for secure computation, and among them, the schemes including secret sharing as a component are known to have a small data processing unit and be able to perform high-speed processing.

Secret sharing is a method of converting secret information into several fragments called shares. For example, there is secret sharing called a (k, n) threshold method in which n shares are generated from the secret information and secrets can be restored from k or more shares, and thus, secret information is not leaked as long as the number of shares to restore the secret information is smaller than k. Shamir secret sharing, duplicate secret sharing, and the like are known as specific methods for configuring secret sharing. In the present specification, one fragment of a value shared by secret sharing is referred to as "share". Further, an entire set of all shares is called a "share value".

In recent years, research on advanced statistics or machine learning using secure computation has been actively performed. However, most of calculations thereof include calculations of an inverse, a square root, an exponent, a logarithm, and the like, going beyond calculations good for secure computation such as addition, subtraction, and multiplication. The calculation of the exponential function is one of basic operations on a computer or the like, and is used in various situations. NPL 1 discloses a method of calculating an exponential function in secure computation. NPL 2 discloses fast right shift/public divisor division, reciprocal, private divisor division, square root and its reciprocal and exponential function for realizing numerical computations such as machine learning. NPL 3 examines the efficiency of protocols for secure evaluation of basic mathematical functions (sqrt, sin, arcsin, amongst others), essential to various application domains. e.g., Artificial Intelligence.

Citation List

Non Patent Literature

NPL 1: Dai Ikarashi, "Secure Real Number Operations for Secure AI -O(|p|)-Bit Communication and O(1)-Round Right Shift Protocol-", CSS2019, 2019
NPL 2: IGARASHI ET AL, "Secure Real Number Operations for Secure A1 - 0(lpl)-Bit Communication and 0(1)-Round Right Shift Protocol", pages 1557 - 1564, PROCEEDINGS OF COMPUTER SECURITY SYMPOSIUM 2019; OCTOBER 21-24, 2019, IPSJ, JAPAN, 14 October 2019
NPL 3: ABDELRAHAMAN ALY ET AL, "Benchmarking Privacy Preserving Scientific Operations", vol. 20190403:061423, pages 1 - 21, IACR, INTERNATIONAL ASSOCIATION FOR CRYPTOLOGIC RESEARCH, 3 April 2019

Summary of the Invention

Technical Problem

However, a method disclosed in NPL 1 is computationally expensive.

An object of the present invention is to provide a secure computation technology capable of calculating an exponential function at high speed in view of the technical difficulty described above.

Means for Solving the Problem

In order to solve the above problem, the present disclosure provides secure exponential function computation systems, a secure computation apparatus, and a program, having the features of the respective independent claims. A secure exponential function computation system of one example not encompassed by the claims but useful for understanding the present invention is a secure exponential function computation system for receiving a share value [a] of a value a as an input, and calculating a share value [exp (a)] of an output of an exponential function of the value a. The secure exponential function computation system includes a plurality of secure computation apparatuses. $\mu$ is an acquirable minimum value of the value a, t is a predetermined integer, and u is the number of bits more than t bits after a decimal point of the value a. Each of the plurality of secure computation apparatus includes a minimum value subtraction unit configured to obtain a share value [a'] of a value a' obtained by subtracting the minimum value $\mu$ from the share value [a]; a bit decomposition unit configured to generate a sequence of share values $[a'_0], ..., [a'_{u-1}]$ of a bit representation $a'_0, ..., a'_{u-1}$ of u upper bits of the value a' from the share value [a']; a selective product unit configured to set $f_i$ as a mantissa part of exp $(2^{i-t})$ and calculate a share value [f'] of a value f' obtained by multiplying all values that become $f_i$ when $a'_i = 1$ and 1 when $a'_i = 0$ where i is an integer equal to or greater than 0 and smaller than u; an upper bit calculation unit configured to set $\varepsilon_i$ as an exponential part of exp $(2^{i-t})$ and calculate a share value [$\varepsilon$'] of a value $\varepsilon$' obtained by multiplying all values that become $2^{\varepsilon_i}$ when $a'_i = 1$ and 1 when $a'_i = 0$ where i is an integer equal to or greater than 0 and smaller than u; a lower bit calculation unit configured to calculate a share value $[a'_\rho]$ of a value $a'_\rho$ obtained by subtracting a sum of values obtained by multiplying $2^{i-t}$ by the share value $[a'_i]$ from the share value [a'] where i is an integer equal to or greater than 0 and smaller than u; an exponential function calculation unit configured to use the share value $[a'_\rho]$ to obtain a share value [w] obtained by calculating $[\exp (a'_\rho)]$; and a result calculation unit configured to calculate the share value [exp (a)] obtained by multiplying the share value [w], the share value [f'], the share value [$\varepsilon$'], and exp ($\mu$).

Effects of the Invention

According to the present invention, it is possible to compute an exponential function at high speed in secure computation.

Brief Description of Drawings

Fig. 1 is a diagram illustrating a functional configuration of a secure exponential function computation system.

Fig. 2 is a diagram illustrating a functional configuration of a secure computation apparatus.

Fig. 3 is a diagram illustrating a functional configuration of a selective product unit.

Fig. 4 is a diagram illustrating a functional configuration of an exponential function calculation unit.

Fig. 5 is a diagram illustrating a processing procedure of a secure exponential function computation method.

Fig. 6 is a diagram illustrating a processing procedure of the selective product unit.

Fig. 7 is a diagram illustrating a processing procedure of the exponential function calculation unit.

Fig. 8 is a diagram illustrating a functional configuration of a computer.

Description of Embodiments

Hereinafter, embodiments of the present invention will be described in detail. In the drawings, components having the same function are denoted by the same numbers, and duplicate description thereof will be omitted.
In the present specification, the following notation is used.
[ ■ ] is data in which a numerical value ■ is hidden. For example, share values of Shamir secret sharing, duplicate secret sharing, or the like can be used.
[a?b:c] represents b when a = 1 and c when a = 0.

[Math. 1]

$$\neg, \wedge, \vee, \oplus$$

Symbols described above indicate a logical negation (NOT), a logical product (AND), a logical sum (OR), and an exclusive OR (XOR), respectively.
An integer in a ring can be regarded as a fixed-point real number by setting a public decimal point position for the integer. In the present invention, the fixed-point real number represented in the ring in this way is simply referred to as a real number.

The "_" (underscore) in the subscript indicates that a character on the left is subscripted with a character on the right. For example, "$a^{b\_c}$" indicates that a is superscripted with $b_c$.

Embodiment: Secure Exponential Function Computation System An embodiment of the present invention is a secure exponential function computation system and method in which a share value [a] of a value a is an input and a share value [exp (a)] of an output of an exponential function of the value a is calculated with the value a hidden. Hereinafter, an overview of an exponential function protocol executed by the secure exponential function computation system of the embodiment will be described.

In the related art, in secure computation, a group of elementary functions such as an inverse, a square root, an exponential function, and a logarithm function that go beyond addition, subtraction, and multiplication has a high processing cost and has not been implemented. In order to solve these problems, the present invention enables an exponential function to be efficiently calculated using an algorithm that can efficiently and uniformly approximate the group of elementary functions in secure computation. With this approximation scheme, it is possible to approximate a major elementary function including an exponential function with a single scheme simply by changing parameters. Further, this approximation scheme is an amount of communication/the number of rounds for three real number multiplications in single precision (23 bits), which is a theoretically optimized efficiency.

The exponential function is an important function that is used as a component of a sigmoid function, a softmax function, or the like in various machine learning schemes such as logistic regression and deep learning, and also used in Fisher's exact test in statistics. Because the exponential function rapidly converges in the Taylor expansion, the exponential function is suitable to be calculated by the Taylor expansion.

[Math. 2]

$$\exp(x) = \sum_{0 \le i \to \infty} \frac{x^i}{i!} = 1 + x + \frac{x^2}{2} + \frac{x^3}{6} + \frac{x^4}{24} \cdots$$

However, because it is clear that convergence of the above equation is slow when x is great, the function cannot be applied in an input as it is. Because the exponential function is additive to an input, x may be additively decomposed as follows so that the following equation is calculated.

(1) Minimum value $\mu$ of assumed input
(2) u upper bits $x_0, ..., x_{u-1}$ that are t or more bits after a decimal point of x - $\mu$
(3) Number $x_\rho$ indicated by all lower bits than $x_0$ of x - $\mu$

[Math. 3]

$$\exp x = \exp \mu \exp 2^{-t} x_0 \cdots \exp 2^{u-t-1} x_{u-1} \exp x_\rho$$

Here, $\exp\mu$ is a public value. $\exp 2^{-t} x_0, ..., \exp 2^{u-t-1} x_{u-1}$ are calculated from a binary table. $\exp x_\rho$ is a part to be calculated by approximation, and is normalized to [0, $2^t$) for efficient calculation. A value of t differs depending on a processing system, but because a processing cost of secure computation is high when a large table is referred to, the value should be set as small as possible. $\exp x_\rho$ can also be calculated by polynomial interpolation.

An algorithm for approximating a group of elementary functions in the secure computation with an eighth degree polynomial is shown hereinafter.

Algorithm 1: Function Approximation Protocol using Eighth Degree Polynomial

Input: [x] ∈ [L, R)

Parameters: A, b, c, d, f, g, H, i, j, k, l, m, n, o, p, q, α, β, γ, δ, and ζ

Output: [func (x)] corresponding to a target function func

[0029]  1: Calculate [y']: = [x($\delta$x + A - i) - j] using a sum of products, and lower a decimal point position by right shift.

2: Calculate [y]: = [y' + (ix + j)].

3: Calculate [z']: = [y($\zeta$y + b - k) + (c - l)x - m] by sum of products, and lower the decimal point position by right shift.

4: Calculate [z]: = [z' + (ky + lx + m)].

5: Calculate [w'/$\gamma$]: = [z($\alpha$z + d - n/$\gamma$) + ($\beta$x + f - o/$\gamma$) y + (g - p)x + (H - q)/$\gamma$] by sum of products, and perform multiplication by $\gamma$ and lowering a decimal point position at the same time to obtain [w'].

6: Output [w]: = [w' + (nz + oy + px + q)].

The lowering of the decimal point position executed in steps 1 and 3 of algorithm 1 can be efficiently performed by using, for example, a public divisor division disclosed in NPL 1.

Simultaneous execution of the public value multiplication and lowering of the decimal point executed in step 5 of algorithm 1 can be efficiently performed by using, for example, the following algorithm.

Algorithm 2: Multiplication of Public Value at Same Time without Increasing Processing Cost from Right Shift

Input: [x], multiplier m, shift amount $\sigma$

Output: [mx] after shift

1: Calculate a public value $2^{\sigma}/m$.

2: Calculate the following equation through public value division. Here, [mx] is regarded as an expression the decimal point position of which is $\sigma$ lower than that of [x].

[Math. 4]

$$\frac{[x]}{\frac{2^{\sigma}}{m}} = [mx]$$

Parameters L, R, A, b, c, d, f, g, H, i, j, k, l, m, n, o, p, q, α, β, γ, δ, and ζ used in algorithm 1 are set according to the approximate function func. When an exponential function that is a target in the present invention is approximated, the respective parameters may be set as shown in the following table, for example.

Note that $e_x$, $e_y$, $e_z$, and $e_w$ are decimal point positions of x, y, z, and w, and $e'_y$, $e'_z$, and $e'_w$ are decimal point positions of y', z', and w'. These are parameters that determine an amount of right shift in eighth degree polynomial approximation. For example, the amount of right shift when y is calculated from y' is $e'_y$ - $e_y$.

[Table 1]

| | | | | |
|---|---|---|---|---|
| L | 0 | α | 3.875 |
| R | 2 | β | 0.4375 |
| A | 0.0150245363909133 | $\gamma^{-1}$ | 0.90198354150868 |
| b | 0.40985277532158 | δ | $2^{-3}$ |
| c | 0.218572247867126 | ζ | $2^{-2}$ |
| d | 6.64826957208433 | $e_x$ | 28 |

| | | | | |
|---|---|---|---|---|
| f | -0.737980772377752 | $e_y$ | 29 |
| g | -0.580995576157224 | $e_z$ | 29 |
| H | 1.00000000300262 | $e_w$ | 27 |
| i | 0.5 | $e'_y$ | 60 |
| j | -0.470402400605697 | $e'_z$ | 61 |
| k | 1 | $e'_w$ | 61 |
| l | 0 | | |
| m | 0 | | |
| n | 20 | | |
| o | 0 | | |
| p | -4 | | |
| q | -0.105107110464577 | | |

An algorithm for calculating an exponential function in secure computation using algorithm 1 is shown hereinafter.

Algorithm 3: Exponential Function Protocol

Input: [a]

Output: [exp (a)]

Parameter: t: = -1

     1: Calculate [a']: = [a] - μ.

     2: Extract bits more than t bits after the decimal point through bit decomposition and perform mod p conversion to obtain $[a'_0]$, ..., $[a'_{u-1}]$.

     3: Set $f_i$ and $\varepsilon_i$ as a mantissa part and an exponential part of exp $(2^{i-t})$, with $0 \leq i < u$.

     4: Set $[a'_0]$, ..., $[a'_{u-1}]$ as conditions, set 1, $f_0$, 1, $f_1$, ..., 1, and $f_{u-1}$ as options, and obtain a product [f'] by performing exponentiation by referencing a binary public table.

     5: Calculate the following equation using an if-then-else gate of an option disclosure with each $0 \leq i < u$.

[Math. 5]

$$[\varepsilon'_i] := \text{if } [a'_i] \text{ then } 2^{\varepsilon_i} \text{ else } 1$$

[0051]  6: Calculate a product [ε'] of $[\varepsilon'_i]$ regarding each i. This is a power of 2 of an exponent part of an upper bit part.

     7: Calculate the following equation. This is a number indicated by a lower bit part.

[Math. 6]

$$[a'_\rho] := [a'] - \sum_{i<u} 2^{i-t}[a'_i]$$

     8: Execute algorithm 1 for $[a'_\rho]$ and calculate an exponential function of $[a'_\rho]$. A result is [w].

     9: Calculate and output [w][f'][ε']exp (μ). Algorithm 2 is used in calculation of exp (μ).

[0028]  The exponentiation by referring to the binary public table executed in step 4 of algorithm 3 is processing of performing a plurality of operations for referencing and selecting a value from a binary table consisting of public values using a secret truth value, and multiplying respective reference results. The exponentiation by referring to the binary public table can be efficiently performed, for example, by using the following algorithm.

Algorithm 4: Exponentiation by Referring to Binary Public Table

Input: Multiplier $m_{0,0}$, $m_{0,1}$, ..., $m_{n-1,0}$, $m_{n-1,1}$ and condition $[c_0]$, ..., $[c_{n-1}]$

Output:

[0058] [Math. 7]

$$\left[ \prod_{0 \leq i < n} (c_i ? m_{i,1} : m_{i,0}) \right]$$

1: Set $n_2$ as a maximum even number equal to or smaller than n.

2: For each $i \in \{0, 2, ..., n_2 - 2\}$

3: Calculate $[c_i c_{i-1}]$.

4: Set $m'_{00} := m_{i,0}m_{i+1,0}$, $m'_{01} := m_{i,0}m_{i+1,1}$, $m'_{10} := m_{i,1}m_{i+1,0}$, $m'_{11} := m_{i,1}m_{i+1,1}$.

5: Calculate $[a_i] := [c_i c_{i+1}] (m_{00} + m_{11} - m_{01} - m_{10}) + [c_i] (m_{i+1,0} - m_{i,0}) + [c_{i+1}](m_{i,1} - m_{i,0}) + m_{i,0}$.

6: Calculate the following equation in real number multiplication. Here, when n is an odd number, last right shift is not performed.

[0064] [Math. 8]

$$[A] := \left[ \prod_{i \in \{0, 2, \cdots, n_2 - 2\}} a_i \right]$$

7: Select remaining $m_{n-1,0}$ and $m_{n-1,1}$ using $[c_{n-1}]$ when n is an odd number, multiply [A] by $m_{n-1,0}$ and $m_{n-1,1}$, and output a resultant value.

Selective public multiplication executed in step 7 of algorithm 4 can be efficiently performed by using, for example, the following algorithm.

Algorithm 5: Multiplication of Required Right Shift Value by Selective Public Multiplier

Input: [a], multipliers $m_0$ and $m_1$, condition [c]

Output: $[m_1 a]$ if c = 1 and $[m_0 a]$ if c = 0

1: Calculate $[m_1 a]$ and $[m_0 a]$.

2: Output $[c ? m_1 a : m_0 a]$ using an if-then-else gate.

The public value multiplication executed in step 1 of algorithm 5 can be efficiently performed, for example, by combining algorithm 2 with the following algorithm.

## Algorithm 6: Right Shift in Plurality of Divisors/Public Divisor Division

Input: $[a]$, divisor $d_0, d_1, \ldots, d_{n-1}$

Output: $[a/d_0], [a/d_1], \ldots, [a/d_{n-1}]$

    1: Obtain a quotient $[q]$ of $[a]$.

    2: Use the quotient $[q]$ to calculate and output $[a/d_i]$ for each i by right shift/public divisor division.

The quotient obtained in step 1 of algorithm 6 can be efficiently obtained through quotient transfer (see Reference 1).

Reference 1: Ryo Kikuchi, Dai Ikarashi, Takahiro Matsuda, Koki Hamada, and Koji Chida, "Efficient bit-decomposition and modulus-conversion protocols with an honest majority", Proceedings of Information Security and Privacy - 23rd Australasian Conference (ACISP 2018), pp. 64-82, July 11-13, 2018.

Secure Exponential Function Computation System 100

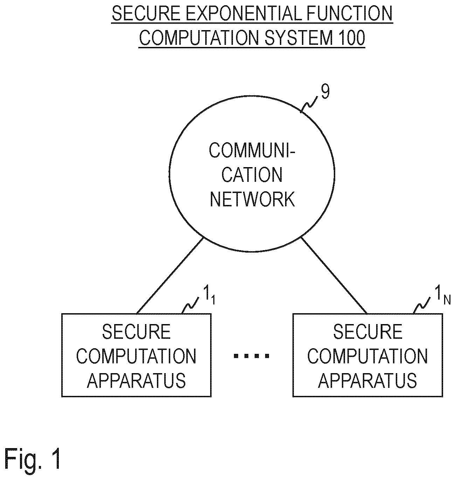

The secure exponential function computation system 100 of the embodiment is an information processing system that executes the above exponential function protocol. As illustrated in Fig. 1, the secure exponential function computation system 100 includes N ($\geq 3$) secure computation apparatuses $1_1, \ldots, 1_N$. In this embodiment, the secure computation apparatuses $1_1, \ldots, 1_N$ are connected to a communication network 9. The communication network 9 is a circuit-switched or packet-switched communication network configured so that respective connected apparatuses can communicate with each other and, for example, the Internet, a local area network (LAN), a wide area network (WAN), or the like can be used. It is not necessary for each apparatus to be able to communicate online via the communication network 9. Each apparatus may be configured to store, for example, information to be input to a secure computation apparatus $1_n$ (n = 1, ..., N) in a portable recording medium such as a magnetic tape or a USB memory and input the information offline from the portable recording medium to the secure computation apparatus $1_n$.

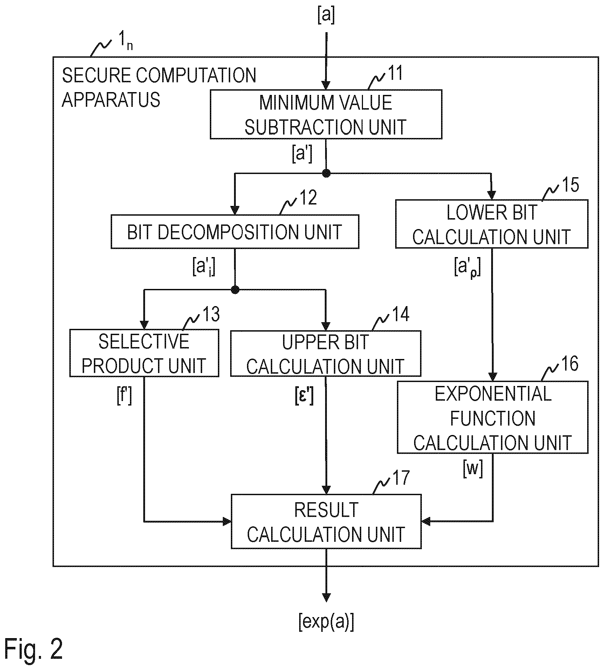

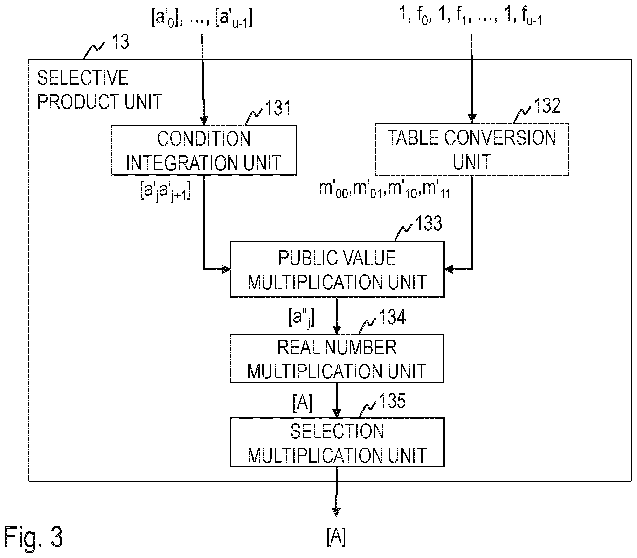

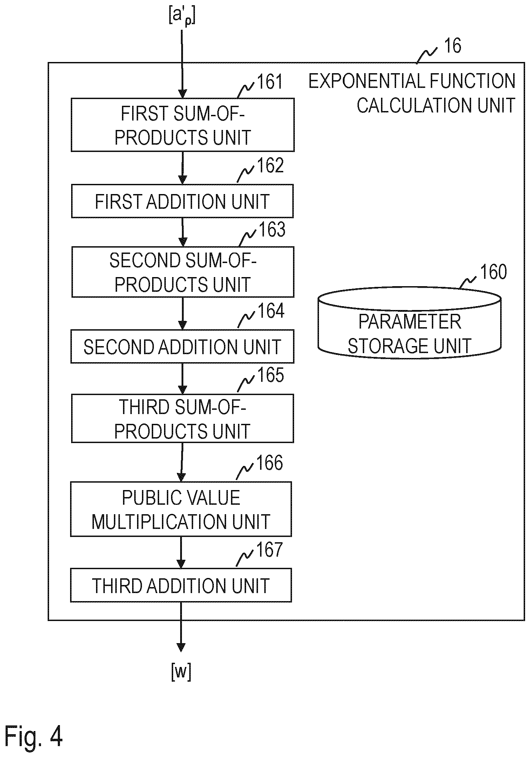

The secure computation apparatus $1_n$ included in the secure exponential function computation system 100 of the embodiment includes, for example, a minimum value subtraction unit 11, a bit decomposition unit 12, a selective product unit 13, an upper bit calculation unit 14, and a lower bit calculation unit 15, an exponential function calculation unit 16, and a result calculation unit 17, as illustrated in Fig. 2. The selective product unit 13 includes, for example, a condition integration unit 131, a table conversion unit 132, a public value multiplication unit 133, a real number multiplication unit 134, and a selection multiplication unit 135, as illustrated in Fig. 3. The exponential function calculation unit 16 includes, for example, a parameter storage unit 160, a first sum-of-products unit 161, a first addition unit 162, a second sum-of-products unit 163, a second addition unit 164, a third sum-of-products unit 165, a public value multiplication unit 166, and a third addition unit 167, as illustrated in Fig. 4.
The secure exponential function computation method according to the embodiment is realized by the secure computation apparatus $1_n$ performing processing of each step to be described below in cooperation with the other secure computation apparatus $1_{n'}$ (n' = 1, ..., N, where n $\neq$ n').

The secure computation apparatus $1_n$ is a special apparatus configured by loading a special program into a publicly known or dedicated computer including, for example, a central processing unit (CPU), a main storage device (RAM: Random Access Memory), and the like. The secure computation apparatus $1_n$ executes each process under the control of the central processing unit, for example. Data input to the secure computation apparatus $1_n$ or data obtained by each processing is stored in, for example, the main storage device, and the data stored in the main storage device is read to the central processing unit as needed, and used for other processing. At least a part of each processing unit of the secure computation apparatus $1_n$ may be configured by hardware such as an integrated circuit. Each storage unit included in the secure computation apparatus $1_n$ can be configured of, for example, a main storage device such as a random access memory (RAM), an auxiliary storage device configured of a hard disk, an optical disc, or a semiconductor memory element such as a flash memory, or middleware such as a relational database or a key value store.

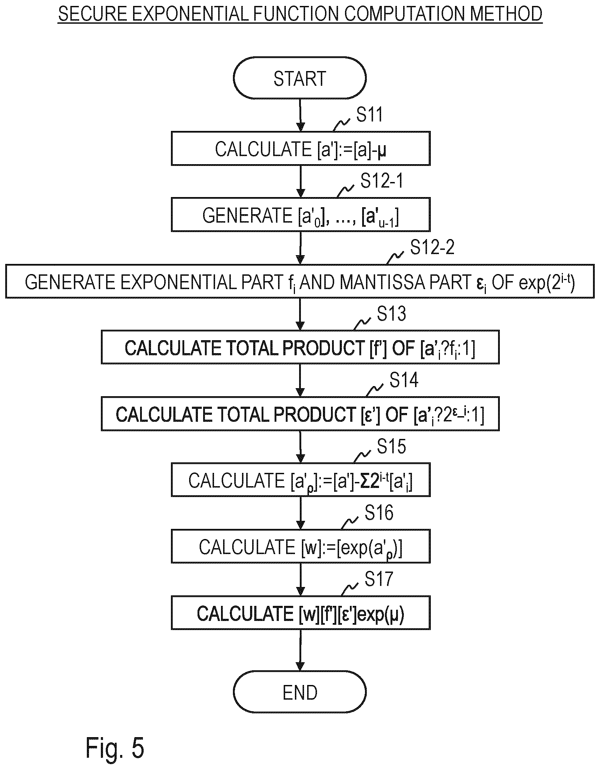

A processing procedure of the secure exponential function computation method executed by the secure exponential function computation system 100 of the embodiment will be described with reference to Fig. 5.

In step S11, the minimum value subtraction unit 11 of each secure computation apparatus $1_n$ subtracts an acquirable minimum value $\mu$ of the value a from the share value $[a]$ of the value a input to the secure exponential function computation system 100 to obtain a share value $[a']$ of the value a'. That is, $[a'] := [a] - \mu$ is calculated. The minimum value subtraction unit 11 outputs the share value $[a']$ to the bit decomposition unit 12 and the lower bit calculation unit 15.

In step S12-1, the bit decomposition unit 12 of each secure computation apparatus $1_n$ bit-decomposes bits more than t bits after the decimal point of the share value $[a']$ of the value a' to obtain a sequence of share values $\{a'_0\}, \ldots, \{a'_{u-1}\}$ of a bit representation $a'_0, ..., a'_{u-1}$ of u upper bits of a'. Next, the bit decomposition unit 12 performs mod p conversion on each of the share values $\{a'_0\}, ..., \{a'_{u-1}\}$ to obtain a sequence of share values $[a'_0], ..., [a'_{u-1}]$. The bit decomposition unit 12 outputs the sequence of the share values $[a'_0], ..., [a'_{u-1}]$ to the selective product unit 13 and the upper bit calculation unit 14. Further, in step S12-2, the bit decomposition unit 12 sets $f_i$ and $\varepsilon_i$ as a mantissa part and an exponential part of $\exp(2^{i-t})$ for each integer i equal to or greater than 0 and smaller than u.

In step S13, the selective product unit 13 of each secure computation apparatus $1_n$ calculates a share value $[f']$ of a value f' obtained by multiplying all values that become $f_i$ when $a'_i = 1$ and 1 when $a'_i = 0$ for each integer i equal to or greater than 0 and smaller than u. That is, algorithm 4 is executed with $[a'_0], ..., [a'_{u-1}]$ as conditions and $1, f_0, 1, f_1, ..., 1, f_{u-1}$ as options to obtain the product $[f']$. The selective product unit 13 outputs the share value $[f']$ to the result calculation unit 17.

In step S14, the upper bit calculation unit 14 of each secure computation apparatus $1_n$ calculates a share value $[\varepsilon']$ of a value $\varepsilon'$ obtained by multiplying all values that become $2^{\varepsilon\_i}$ when $a'_i = 1$ and 1 when $a'_i = 0$ for each integer i equal to or greater than 0 and smaller than u. That is, in each $0 \leq i < u$, $[\varepsilon'_i] := $ if $[a'_i]$ then $2^{\varepsilon\_i}$ else 1 is calculated by an if-then-else gate of an option disclosure and a product $[\varepsilon']$ obtained by multiplying $[\varepsilon_i]$'s regarding each i is calculated. The upper bit calculation unit 14 outputs the share value $[\varepsilon']$ to the result calculation unit 17.

In step S15, the lower bit calculation unit 15 of each secure computation apparatus $1_n$ calculates a share value $[a'_\rho]$ of a value $a'_\rho$ obtained by subtracting a sum of values obtained by multiplying $2^{i-t}$ by $[a'_i]$ from the share value $[a']$ of the value a' for each integer i equal to or greater than 0 and smaller than u. That is, the following equation is calculated. The lower bit calculation unit 15 outputs the share value $[a'_\rho]$ to the result calculation unit 17.

[Math. 9]

$$[a'_\rho] := [a'] - \sum_{i<u} 2^{i-t}[a'_i]$$

In step S16, the exponential function calculation unit 16 of each secure computation apparatus $1_n$ uses parameters for approximating an exponential function with an eighth degree polynomial to execute algorithm 1, so that the exponential function is calculated for the share value $[a'_\rho]$ of the value $a'_\rho$, and generates a share value $[w]$ of a calculation result w. The exponential function calculation unit 16 outputs the share value $[w]$ to the result calculation unit 17.

In step S17, the result calculation unit 17 of each secure computation apparatus $1_n$ multiplies the share value $[w]$ of the calculation result w, the share value $[f']$ of the value f', the share value $[\varepsilon']$ of the value $\varepsilon'$, and $\exp(\mu)$, and outputs a share value $[\exp(a)]$ of an output of the exponential function of the value a.

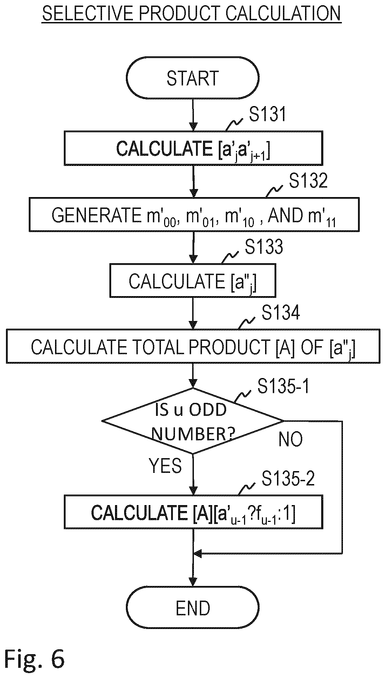

A processing procedure that is executed by the selective product unit 13 will be described in detail with reference to Fig. 6.

Hereinafter, $n_2$ is a maximum even number equal to or smaller than u. For each even number j equal to or greater than 0 and equal to or smaller than $n_2 - 2$, the following steps S131 to S133 are performed.

In step S131, the condition integration unit 131 of the selective product unit 13 calculates a share value $[a'_j a'_{j+1}]$ of a value $a'_j a'_{j+1}$ obtained by multiplying a share value $[a'_j]$ of a value $a'_j$ by a share value $[a'_{j+1}]$ of a value $a'_{j+1}$. The condition integration unit 131 outputs the share value $[a'_j a'_{j+1}]$ to the public value multiplication unit 133.

In step S132, the table conversion unit 132 of the selective product unit 13 sets $m'_{00} := 1$, $m'_{01} := f_{j+1}$, $m'_{10} := f_j$, and $m'_{11} := f_j f_{j+1}$ to generate a four-value table including $m'_{00}, m'_{01}, m'_{10}$, and $m'_{11}$. The table conversion unit 132 outputs the four-value table including $m'_{00}, m'_{01}, m'_{10}$, and $m'_{11}$ to the public value multiplication unit 133.

In step S133, the public value multiplication unit 133 of the selective product unit 13 calculates $[a'_j a'_{j+1}](m_{00} + m_{11} - m_{01} - m_{10}) + [a'_{j+1}](f_j - 1) + 1$. The public value multiplication unit 133 outputs the share value $[a''_j]$ to the real number multiplication unit 134.

In step S134, the real number multiplication unit 134 of the selective product unit 13 calculates a share value $[A]$ of a value A multiplied by all the share values $[a''_j]$. That is, the following equation is calculated. Because multiplication is real number multiplication, it is necessary for right shifting to be performed lastly, but when u is an odd number, the right shift is not performed herein.

[Math. 10]

$$[A] := \left[ \prod_{j \in \{0, 2, \cdots, n_2 - 2\}} a''_j \right]$$

In step S135, if u is an odd number, the selection multiplication unit 135 of the selective product unit 13 multiplies the share value $[A]$ of the value A by a value that becomes $f_{u-1}$ when $a'_{u-1} = 1$ and 1 when $a'_{u-1} = 0$, and outputs a resultant value. That is, $[A][a'_{u-1}?f_{u-1}:1]$ is calculated.

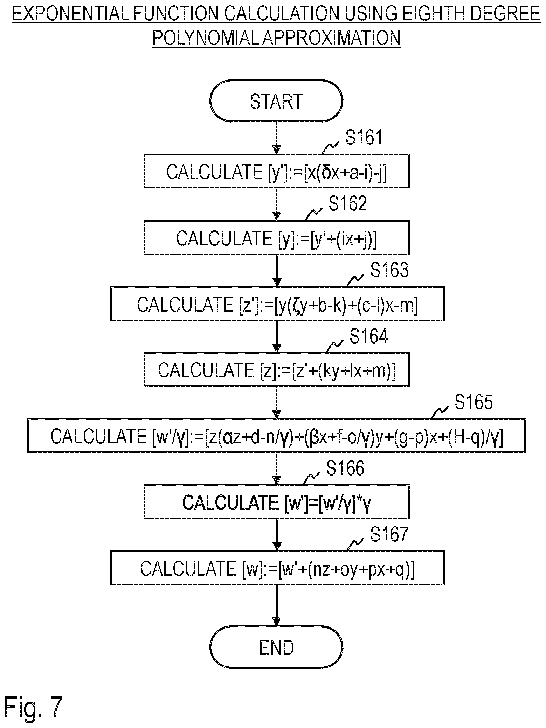

A processing procedure that is executed by the exponential function calculation unit 16 will be described in detail with reference to Fig. 7.

Parameters A, b, c, d, f, g, H, i, j, k, l, m, n, o, p, q, $\alpha$, $\beta$, $\gamma$, $\delta$, and $\zeta$ for approximating the exponential function with an eighth degree polynomial are stored in the parameter storage unit 160. Each parameter is determined in advance according to a function to be approximated, and when the exponential function is approximated, values shown in Table 1 may be set.

In step S161, the first sum-of-products unit 161 of the exponential function calculation unit 16 calculates $[y'] := [x(\delta x + A - i) - j]$ through a sum of products, and lowers the decimal point position through right shift. Here, x is a number $a'_\rho$ indicating a lower bit part of the value a. That is, $[x] := [a'_\rho]$. The first sum-of-products unit 161 outputs [y'] to the first addition unit 162.

In step S162, the first addition unit 162 of the exponential function calculation unit 16 calculates $[y] := [y' + (ix + j)]$. The first addition unit 162 outputs [y] to the second sum-of-products unit 163.

In step S163, the second sum-of-products unit 163 of the exponential function calculation unit 16 calculates $[z'] := [y(\zeta y + b - k) + (c - l)x - m]$ through a sum of products, and lowers a decimal point position through right shift. The second sum-of-products unit 163 outputs [z'] to the second addition unit 164.

In step S164, the second addition unit 164 of the exponential function calculation unit 16 calculates $[z] := [z' + (ky + lx + m)]$. The second addition unit 164 outputs [z] to the third sum-of-products unit 165.

In step S165, the third sum-of-products unit 165 of the exponential function calculation unit 16 calculates $[w'/y] := [z(\alpha z + d - n/\gamma) + (\beta x + f - o/y)y + (g - p)x + (H - q)/\gamma]$ through a sum of products. The third sum-of-products unit 165 outputs $[w'/\gamma]$ to the public value multiplication unit 166.

In step S166, the public value multiplication unit 166 of the exponential function calculation unit 16 calculates $[w'] := [w'/\gamma] * \gamma$. The public value multiplication unit 166 outputs [w'] to the third addition unit 167.

In step S167, the third addition unit 167 of the exponential function calculation unit 16 calculates $[w] := [w' + (nz + oy + px + q)]$.

Although the embodiments of the present invention have been described above, a specific configuration is not limited to these embodiments. Various processing described in the embodiments may be not only executed in chronological order according to order of description, but may also be executed in parallel or individually according to a processing capacity of an apparatus that executes processing or as necessary.

Program and Recording Medium

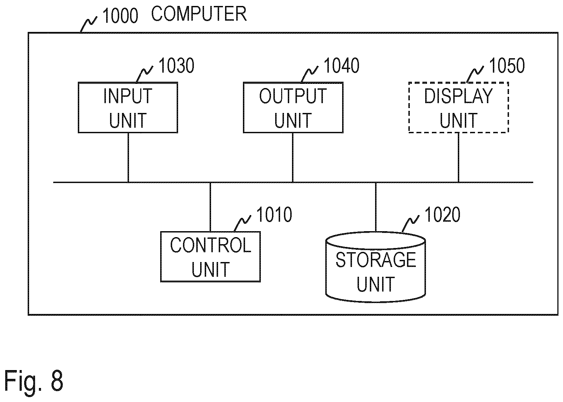

When various processing functions in each apparatus described in the above embodiment are realized by a computer, processing content of the function to be included in each apparatus is described by a program. This program is loaded into a storage unit 1020 of a computer illustrated in Fig. 8 and a control unit 1010, an input unit 1030, an output unit 1040, and the like are operated so that various processing functions in each of the above apparatuses are realized on the computer.

A program in which processing content thereof has been described can be recorded on a computer-readable recording medium. The computer-readable recording medium may be, for example, a magnetic recording device, an optical disc, a magneto-optical recording medium, or a semiconductor memory.

Further, distribution of this program is performed, for example, by selling, transferring, or renting a portable recording medium such as a DVD or CD-ROM on which the program has been recorded. Further, the program may be distributed by being stored in a storage device of a server computer and transferred from the server computer to another computer via a network.

The computer that executes such a program first temporarily stores, for example, the program recorded on the portable recording medium or the program transferred from the server computer in a storage device of the computer. When the computer executes the processing, the computer reads the program stored in the recording medium of the computer and executes processing according to the read program. Further, as another embodiment of the program, the computer may directly read the program from the portable recording medium and execute the processing according to the program, and further, processing according to a received program may be sequentially executed each time the program is transferred from the server computer to the computer. Further, a configuration may be adopted in which the above-described processing is executed by a so-called application service provider (ASP) type service for realizing a processing function according to only an execution instruction and result acquisition without transferring the program from the server computer to the computer. It is assumed that the program in the present embodiment includes information provided for processing of an electronic calculator and being pursuant to the program (such as data that is not a direct command to the computer, but has properties defining processing of the computer).

Further, in this embodiment, although the present apparatus is configured by a predetermined program being executed on the computer, at least a part of processing content of thereof may be realized by hardware.

**Claims**

1. A secure exponential function computation system (100) for calculating; from a secretly shared value of an input value a, a secretly shared value of the output of an exponential function of the input value a, the secure exponential function computation system comprising:

   a plurality of secure computation apparatuses ($1_1$, ..., $1_N$)
   wherein $\mu$ is an acquirable minimum value of the value a, t is a predetermined integer, and u is the number of bits more than t bits after a decimal point of the value a, and
   each of the plurality of secure computation apparatuses comprises:

   a minimum value subtraction unit (11) adapted to obtain a share value [a'] of a value a' equal to the subtraction of the minimum value $\mu$ from the input value a;
   a bit decomposition unit (12) adapted to generate a sequence of share values $[a'_0]$, ..., $[a'_{u-1}]$ of a bit representation $a'_0$, ..., $a'_{u-1}$ of u upper bits of the value a' from the share value [a'];
   a selective product unit (13) adapted to set $f_i$ as a mantissa part of $\exp(2^{i-t})$ and calculate a share value [f'] of a value f' equal to the multiplication of all values that become $f_i$ when $a'_i = 1$ and 1 when $a'_i = 0$ where i is an integer equal to or greater than 0 and smaller than u;
   an upper bit calculation unit (14) adapted to set $\varepsilon_i$ as an exponential part of $\exp(2^{i-t})$ and calculate a share value [$\varepsilon'$] of a value $\varepsilon'$ equal to the multiplication of all values that become $2^{\varepsilon\_i}$ when $a'_i = 1$ and 1 when $a'_i = 0$ where i is an integer equal to or greater than 0 and smaller than u;
   a lower bit calculation unit (15) adapted to calculate a share value $[a'_\rho]$ of a value $a'_\rho$ equal to the subtraction of a sum of values obtained by multiplying $2^{i-t}$ by the value $a'_i$ from the value a where i is an integer equal to or greater than 0 and smaller than u;
   an exponential function calculation unit (16) adapted to use the share value $[a'_\rho]$ to obtain a share value [w] of a value w approximating $\exp(a'_\rho)$; and
   a result calculation unit (17) adapted to calculate the share value [exp (a)] equal to the multiplication of the values w, f', $\varepsilon'$ and $\exp(\mu)$,
   wherein A, b, c, d, f, g, H, i, j, k, l, m, n, o, p, q, $\alpha$, $\beta$, $\gamma$, $\delta$, and $\zeta$ are parameters for approximating an exponential function with an eighth degree polynomial, and $[x] := [a'_\rho]$ is assumed, and
   the exponential function calculation unit (16) includes

   a first sum-of-products unit (161) adapted to calculate $[y'] := [x(\delta x + A - i) - j]$,
   a first addition unit (162) adapted to calculate $[y] := [y' + (ix + j)]$,
   a second sum-of-products unit (163) adapted to calculate $[z'] := [y(\zeta y + b - k) + (c - l)x - m]$,
   a second addition unit (164) adapted to calculate $[z] := [z' + (ky + lx + m)]$,
   a third sum-of-products unit (165) adapted to calculate $[w'/\gamma] := [z(\alpha z + d - n/y) + (\beta x + f - o/y)y + (g - p)x + (H - q)/\gamma]$,
   a public key multiplication unit (166) adapted to calculate $[w'] := [w'/\gamma] * \gamma$; and
   a third addition unit (167) adapted to calculate $[w] := [w' + (nz + op + px + q)]$.

2. A secure exponential function computation method executed by a secure exponential function computation system (100) comprising a plurality of secure computation apparatuses ($1_1$, ..., $1_N$), the secure exponential function computation method for calculating, from a secretly shared value of an input value a, a secretly shared value of the output of an exponential function of the input value a,

   wherein $\mu$ is an acquirable minimum value of the value a, t is a predetermined integer, and u is the number of bits more than t bits after a decimal point of the input value a,
   the secure exponential function computation method comprising, by each of the plurality of secure computation apparatuses:

   obtaining, by a minimum value subtraction unit (11), a share value [a'] of a value a' equal to the subtraction of the minimum value $\mu$ from the input value a;
   generating, by a bit decomposition unit (12), a sequence of share values $[a'_0]$, ..., $[a'_{u-1}]$ of a bit representation $a'_0$, ..., $a'_{u-1}$ of u upper bits of the value a' from the share value [a'];
   setting, by a selective product unit (13), $f_i$ as a mantissa part of $\exp(2^{i-t})$;
   calculating, by the selective product unit (13), a share value [f'] of a value f equal to the multiplication of all values that become $f_i$ when $a'_i = 1$ and 1 when $a'_i = 0$, where i is an integer equal to or greater than 0 and smaller than u;

setting, by an upper bit calculation unit (14), $\varepsilon_i$ as an exponential part of $\exp(2^{i-t})$; calculating, by the upper bit calculation unit (14), a share value $[\varepsilon']$ of a value $\varepsilon'$ equal to the multiplication of all values that become $2^{\varepsilon\_i}$ when $a'_i = 1$ and 1 when $a'_i = 0$, where i is an integer equal to or greater than 0 and smaller than u;

calculating, by a lower bit calculation unit (15), a share value $[a'_\rho]$ of a value $a'_\rho$ equal to the subtraction of a sum of values obtained by multiplying $2^{i-t}$ by the value $a'_i$ from the value $a'$, where i is an integer equal to or greater than 0 and smaller than u;

using, by an exponential function calculation unit (16), the share value $[a'_\rho]$ to obtain a share value $[w]$ of a value w approximating $\exp(a'_\rho)$; and

calculating, by a result calculation unit (17), the share value $[\exp(a)]$ of a value equal to the multiplication of the values f', $\varepsilon'$, and $\exp(\mu)$,

wherein A, b, c, d, f, g, H, i, j, k, l, m, n, o, p, q, $\alpha$, $\beta$, $\gamma$, $\delta$, and $\zeta$ are parameters for approximating an exponential function with an eighth degree polynomial, and $[x]:=[a'_\rho]$ is assumed, and the exponential function calculation unit (16) includes:

calculating, by a first sum-of-products unit (161), $[y'] := [x(\delta x + A - i) - j]$,
calculating, by a first addition unit (162), $[y] := [y' + (ix + j)]$,
calculating, by a second sum-of-products unit (163), $[z'] := [y(\zeta y + b - k) + (c - l) x - m]$,
calculating, by a second addition unit (164), $[z] := [z' + (ky + lx + m)]$,
calculating, by a third sum-of-products unit (165), $[w'/y] := [z(\alpha z + d - n/\gamma) + (\beta x + f - o/y)y + (g - p) x + (H - q)/\gamma]$,
calculating, by a public key multiplication unit (166), $[w'] := [w'/\gamma] * \gamma$; and calculating, by a third addition unit (167), $[w] := [w' + (nz + op + px + q)]$.

3.   A secure computation apparatus ($1_n$ of the plurality of secure computation apparatuses comprised in the secure exponential function computation system according to claim 1.

4.   A program comprising instructions which, when executed by a computer, causes the computer to perform, as one of the secure computation apparatuses of the plurality of secure computation apparatuses, the method according to claim 2.


**Patentansprüche**

1.   Sicheres Exponentialfunktionsberechnungssystem (100) zum Berechnen eines heimlich geteilten Werts der Ausgabe einer Exponentialfunktion eines Eingabewerts a aus einem heimlich geteilten Wert des Eingabewerts a, wobei das sichere Exponentialfunktionsberechnungssystem Folgendes aufweist:

eine Vielzahl von sicheren Berechnungsvorrichtungen ($1_1$, ..., $1_N$),
wobei $\mu$ ein erfassbarer Minimalwert des Werts a ist, t eine vorbestimmte ganze Zahl ist und u die Anzahl von Bits ist, die mehr als t Bits nach einem Dezimalpunkt des Werts a ist, und
jede der Vielzahl von sicheren Berechnungsvorrichtungen Folgendes aufweist:

eine Minimalwertsubtraktionseinheit (11), die dazu geeignet ist, einen Teilungswert $[a']$ eines Werts a' zu erhalten, der gleich der Subtraktion des Minimalwerts $\mu$ von dem Eingabewert a ist;
eine Bitzerlegungseinheit (12), die dazu geeignet ist, eine Sequenz von Teilungswerten $[a'_0]$, ..., $[a'_{u-1}]$ einer Bitdarstellung $a'_0$, ..., $a'_{u-1}$ von u oberen Bits des Werts a' aus dem Teilungswert $[a']$ zu erzeugen;
eine Selektivprodukteinheit (13), die dazu geeignet ist, $f_i$ als einen Mantissenteil von $\exp(2^{i-t})$ einzustellen und einen Teilungswert $[f]$ eines Werts f zu berechnen, der gleich der Multiplikation aller Werte ist, die $f_i$ werden, wenn $a'_i = 1$ und 1, wenn $a'_i = 0$, wobei i eine ganze Zahl ist, die gleich oder größer als 0 und kleiner als u ist;
eine Oberbitberechnungseinheit (14), die dazu geeignet ist, $\varepsilon_i$ als einen Exponentialteil von $\exp(2^{i-t})$ einzustellen und einen Teilungswert $[\varepsilon']$ eines Werts $\varepsilon'$ zu berechnen, der gleich der Multiplikation aller Werte ist, die $2^{\varepsilon\_i}$ werden, wenn $a'_i = 1$ und 1, wenn $a'_i = 0$, wobei i eine ganze Zahl ist, die gleich oder größer als 0 und kleiner als u ist;
eine Unterbitberechnungseinheit (15), die dazu geeignet ist, einen Teilungswert $[a'_\rho]$ eines Werts $a'_\rho$ zu berechnen, der gleich der Subtraktion einer Summe von Werten ist, die durch Multiplizieren von $2^{i-t}$ mit dem Wert $a'_i$ von dem Wert a erhalten werden, wobei i eine ganze Zahl ist, die gleich oder größer als 0 und kleiner

13

als u ist;

eine Exponentialfunktionsberechnungseinheit (16), die dazu geeignet ist, den Teilungswert $[a'_\rho]$ dazu zu verwenden, einen Teilungswert [w] eines Werts w zu erhalten, der exp $(a'_\rho)$ approximiert; und

eine Ergebnisberechnungseinheit (17), die dazu geeignet ist, den Teilungswert [exp (a)] zu berechnen, der gleich der Multiplikation der Werte w, f' ε' und exp (μ) ist,

wobei A, b, c, d, f, g, H, i, j, k, l, m, n, o, p, q, α, β, γ, δ und ζ Parameter zum Approximieren einer Exponentialfunktion mit einem Polynom achten Grades sind, und $[x] := [a'_\rho]$ angenommen wird, und die Exponentialfunktionsberechnungseinheit (16) Folgendes aufweist:

eine erste Produktsummeneinheit (161), die dazu geeignet ist, $[y'] := [x(\delta x + A - i) - j]$ zu berechnen,

eine erste Additionseinheit (162), die dazu geeignet ist, $[y] := [y' + (ix + j)]$ zu berechnen,

eine zweite Produktsummeneinheit (163), die dazu geeignet ist, $[z'] := [y(\zeta y + b - k) + (c - l) x - m]$ zu berechnen,

eine zweite Additionseinheit (164), die dazu geeignet ist, $[z] := [z' + (ky + lx + m)]$ zu berechnen,

eine dritte Produktsummeneinheit (165), die dazu geeignet ist, $[w'/y] := [z(\alpha z + d - n/y) + (\beta x + f - o/y)y + (g - p) x + (H - q)/y]$ zu berechnen,

eine Öffentlicher-Schlüssel-Multiplikationseinheit (166), die dazu geeignet ist, $[w'] := [w'/y] * \gamma$ zu berechnen; und

eine dritte Additionseinheit (167), die dazu geeignet ist, $[w] := [w' + (nz+op+px+q)]$ zu berechnen.

**2.** Sicheres Exponentialfunktionsberechnungsverfahren, das durch ein sicheres Exponentialfunktionsberechnungssystem (100) ausgeführt wird, das eine Vielzahl von sicheren Berechnungsvorrichtungen $(1_1, ..., 1_N)$ aufweist, wobei das sichere Exponentialfunktionsberechnungsverfahren zum Berechnen eines heimlich geteilten Werts der Ausgabe einer Exponentialfunktion eines Eingabewerts a aus einem heimlich geteilten Wert des Eingabewerts a dient,

wobei μ ein erfassbarer Minimalwert des Werts a ist, t eine vorbestimmte ganze Zahl ist und u die Anzahl von Bits ist, die mehr als t Bits nach einem Dezimalpunkt des Eingabewerts a ist,

wobei das sichere Exponentialfunktionsberechnungsverfahren durch jede der Vielzahl von sicheren Berechnungsvorrichtungen Folgendes aufweist:

Erhalten eines Teilungswerts [a'] eines Werts a', der gleich der Subtraktion des Minimalwerts μ von dem Eingabewert a ist, durch eine Minimalwertsubtraktionseinheit (11);

Erzeugen einer Sequenz von Teilungswerten $[a'_0], ..., [a'_{u-1}]$ einer Bitdarstellung $a'_0, ..., a'_{u-1}$ von u oberen Bits des Werts a' aus dem Teilungswert [a'] durch eine Bitzerlegungseinheit (12);

Einstellen von $f_i$ als einen Mantissenteil von $\exp(2^{i-t})$ durch eine Selektivprodukteinheit (13);

Berechnen eines Teilungswerts [f] eines Werts f, der gleich der Multiplikation aller Werte ist, die $f_i$ werden, wenn $a'_i = 1$ und 1, wenn $a'_i = 0$, wobei i eine ganze Zahl ist, die gleich oder größer als 0 und kleiner als u ist, durch die Selektivprodukteinheit (13);

Einstellen von $\varepsilon_i$ als einen Exponentialteil von $\exp(2^{i-t})$ durch eine Oberbitberechnungseinheit (14); Berechnen eines Teilungswerts [ε'] eines Werts ε', der gleich der Multiplikation aller Werte ist, die $2^{\varepsilon\_i}$ werden, wenn $a'_i = 1$ und 1, wenn $a'_i = 0$, durch die Oberbitberechnungseinheit (14), wobei i eine ganze Zahl ist, die gleich oder größer als 0 und kleiner als u ist;

Berechnen eines Teilungswerts $[a'_\rho]$ eines Werts $a'_\rho$, der gleich der Subtraktion einer Summe von Werten ist, die durch Multiplizieren von $2^{i-t}$ mit dem Wert $a'_i$ erhalten werden, von dem Wert a' durch eine Unterbitberechnungseinheit (15), wobei i eine ganze Zahl ist, die gleich oder größer als 0 und kleiner als u ist;

Verwenden des Teilungswerts $[a'_\rho]$ durch eine Exponentialfunktionsberechnungseinheit (16) dazu, einen Teilungswert [w] eines Werts w zu erhalten, der $\exp(a'_\rho)$ approximiert; und

Berechnen des Teilungswerts [exp(a)] eines Werts, der gleich der Multiplikation der Werte f, ε' und exp(μ) ist, durch eine Ergebnisberechnungseinheit (17),

wobei A, b, c, d, f, g, H, i, j, k, l, m, n, o, p, q, α, β, γ, δ und ζ Parameter zum Approximieren einer Exponentialfunktion mit einem Polynom achten Grades sind, und $[x] := [a'_\rho]$ angenommen wird, und die Exponentialfunktionsberechnungseinheit (16) Folgendes aufweist:

Berechnen von $[y'] := [x(\delta x + A - i) - j]$ durch eine erste Produktsummeneinheit (161),

Berechnen von $[y] := [y' + (ix + j)]$ durch eine erste Additionseinheit (162),

Berechnen von $[z'] := [y(\zeta y + b - k) + (c - l) x - m]$ durch eine zweite Produktsummeneinheit (163),

Berechnen von $[z] := [z' + (ky + lx + m)]$ durch eine zweite Additionseinheit (164),

Berechnen von $[w'/\gamma] := [z(\alpha z + d - n/\gamma) + (\beta x + f - o/y)y + (g - p) x + (H-q)/\gamma]$ durch eine dritte

**14**

Produktsummeneinheit (165),
Berechnen von [w']: = [w'/y] * $\gamma$ durch eine Öffentlicher-Schlüssel-Multiplikationseinheit (166); und
Berechnen von [w]: = [w' + (nz+op+px+q)] durch eine dritte Additionseinheit (167).

**3.** Sichere Berechnungsvorrichtung ($1_n$) der Vielzahl von sicheren Berechnungsvorrichtungen, die in dem sicheren Exponentialfunktionsberechnungssystem nach Anspruch 1 enthalten sind.

**4.** Programm, das Anweisungen aufweist, die, wenn sie von einem Computer ausgeführt werden, den Computer veranlassen, als eine der sicheren Berechnungsvorrichtungen der Vielzahl von sicheren Berechnungsvorrichtungen das Verfahren nach Anspruch 2 durchzuführen.


**Revendications**

**1.** Système de calcul de fonction exponentielle sécurisée (100) pour calculer, à partir d'une valeur secrètement partagée d'une valeur d'entrée a, une valeur secrètement partagée de la sortie d'une fonction exponentielle de la valeur d'entrée a, le système de calcul de fonction exponentielle sécurisée comprenant :

une pluralité d'appareils de calcul sécurisés ($1_1$, ..., $1_N$)
dans lequel $\mu$ est une valeur minimale pouvant être acquise de la valeur a, t est un entier prédéterminé, et u est le nombre de bits supérieur à t bits après un point décimal de la valeur a, et
chacun de la pluralité d'appareils de calcul sécurisés comprend :

une unité de soustraction de valeur minimale (11) adaptée pour obtenir une valeur partagée [a'] d'une valeur a' égale à la soustraction de la valeur minimale $\mu$ de la valeur d'entrée a ;
une unité de décomposition de bits (12) adaptée pour générer une séquence de valeurs partagées $[a'_0]$, ..., $[a'_{u-1}]$ d'une représentation de bits $a'_0$, ..., $a'_{u-1}$ de u bits supérieurs de la valeur a' à partir de la valeur partagée [a'] ;
une unité de produit sélectif (13) adaptée pour définir $f_i$ comme une partie mantisse de exp ($2^{i-t}$) et calculer une valeur partagée [f] d'une valeur f égale à la multiplication de toutes les valeurs qui deviennent $f_i$ lorsque $a'_i$ = 1 et 1 lorsque $a'_i$ = 0 où i est un entier égal ou supérieur à 0 et inférieur à u ;
une unité de calcul de bit supérieur (14) adaptée pour définir $\varepsilon_i$ comme une partie exponentielle de exp ($2^{i-t}$) et calculer une valeur partagée [$\varepsilon'$] d'une valeur $\varepsilon'$ égale à la multiplication de toutes les valeurs qui deviennent $2^{\varepsilon\_i}$ lorsque $a'_i$ = 1 et 1 lorsque $a'_i$ = 0 où i est un entier égal ou supérieur à 0 et inférieur à u ;
une unité de calcul de bit inférieur (15) adaptée pour calculer une valeur partagée [$a'_\rho$] d'une valeur $a'_\rho$ égale à la soustraction d'une somme de valeurs obtenues en multipliant $2^{i-t}$ par la valeur $a'_i$ de la valeur a où i est un entier égal ou supérieur à 0 et inférieur à u ;
une unité de calcul de fonction exponentielle (16) adaptée pour utiliser la valeur partagée [$a'_\rho$] pour obtenir une valeur partagée [w] d'une valeur w approximant exp ($a'_\rho$) ; et
une unité de calcul de résultat (17) adaptée pour calculer la valeur partagée [exp (a)] égale à la multiplication des valeurs w, f', $\varepsilon'$ et exp ($\mu$),
dans lequel A, b, c, d, f, g, H, i, j, k, l, m, n, o, p, q, $\alpha$, $\beta$, $\gamma$, $\delta$ et $\zeta$ sont des paramètres pour approximer une fonction exponentielle avec un polynôme de huitième degré, et [x] : = [$a'_\rho$] est supposé, et
l'unité de calcul de fonction exponentielle (16) comprend

une première unité de somme de produits (161) adaptée pour calculer [y'] : = [x($\delta$x + A - i) - j],
une première unité d'addition (162) adaptée pour calculer [y] : = [y' + (ix + j)],
une deuxième unité de somme de produits (163) adaptée pour calculer [z'] : = [y($\zeta$y + b - k) + (c - l) x - m],
une deuxième unité d'addition (164) adaptée pour calculer [z] : = [z' + (ky + lx + m)],
une troisième unité de somme de produits (165) adaptée pour calculer [w'/y] : = [z($\alpha$z + d - n/y) + ($\beta$x + f - o/y)y + (g - p) x + (H - q)/$\gamma$],
une unité de multiplication de clé publique (166) adaptée pour calculer [w'] : = [w'/$\gamma$] * $\gamma$ ; et
une troisième unité d'addition (167) adaptée pour calculer [w] : = [w' + (nz+op+px+q)].

**2.** Procédé de calcul de fonction exponentielle sécurisée exécuté par un système de calcul de fonction exponentielle sécurisée (100) comprenant une pluralité d'appareils de calcul sécurisés ($1_1$, ..., $1_N$), le procédé de calcul de fonction exponentielle sécurisée pour calculer, à partir d'une valeur secrètement partagée d'une valeur d'entrée a, une valeur secrètement partagée de la sortie d'une fonction exponentielle de la valeur d'entrée a,

dans lequel $\mu$ est une valeur minimale pouvant être acquise de la valeur a, t est un entier prédéterminé, et u est le nombre de bits supérieur à t bits après un point décimal de la valeur d'entrée a,

le procédé de calcul de fonction exponentielle sécurisée comprenant, par chacun de la pluralité d'appareils de calcul sécurisés :

l'obtention, par une unité de soustraction de valeur minimale (11), d'une valeur partagée [a'] d'une valeur a' égale à la soustraction de la valeur minimale $\mu$ de la valeur d'entrée a ;

la génération, par une unité de décomposition de bits (12), d'une séquence de valeurs partagées $[a'_0]$, ..., $[a'_{u-1}]$ d'une représentation de bits $a'_0$, ..., $a'_{u-1}$ de u bits supérieurs de la valeur a' à partir de la valeur partagée [a'] ;

la définition, par une unité de produit sélectif (13), de $f_i$ comme une partie mantisse de $\exp(2^{i-t})$ ;

le calcul, par l'unité de produit sélectif (13), d'une valeur partagée [f] d'une valeur f égale à la multiplication de toutes les valeurs qui deviennent $f_i$, lorsque $a'_i = 1$ et 1 lorsque $a'_i = 0$, où i est un entier égal ou supérieur à 0 et inférieur à u ;

la définition, par une unité de calcul de bit supérieur (14), $\varepsilon_i$ comme une partie exponentielle de $\exp(2^{i-t})$ ; le calcul, par l'unité de calcul de bit supérieur (14), d'une valeur partagée [$\varepsilon'$] d'une valeur $\varepsilon'$ égale à la multiplication de toutes les valeurs qui deviennent $2^{\varepsilon\_i}$ lorsque $a'_i = 1$ et 1 lorsque $a'_i = 0$, où i est un entier égal ou supérieur à 0 et inférieur à u ;

le calcul, par une unité de calcul de bit inférieur (15), d'une valeur partagée [$a'_\rho$] d'une valeur $a'_p$ égale à la soustraction d'une somme de valeurs obtenues en multipliant $2^{i-t}$ par la valeur $a'_i$ de la valeur a', où i est un entier égal ou supérieur à 0 et inférieur à u ;

l'utilisation, par une unité de calcul de fonction exponentielle (16), de la valeur partagée [$a'_p$] pour obtenir une valeur partagée [w] d'une valeur w approximant $\exp(a'_p)$ ; et

le calcul, par une unité de calcul de résultat (17), de la valeur partagée [exp(a)] d'une valeur égale à la multiplication des valeurs f' $\varepsilon'$ et $\exp(\mu)$,

dans lequel A, b, c, d, f, g, H, i, j, k, l m, n, o, p, q, $\alpha$, $\beta$, $\gamma$, $\delta$ et $\zeta$ sont des paramètres pour approximer une fonction exponentielle avec un polynôme de huitième degré, et [x] : = [$a'_p$] est supposé, et l'unité de calcul de fonction exponentielle (16) comprend :

le calcul, par une première unité de somme de produits (161), de [y'] : = [x($\delta$x + A - i) - j],

le calcul, par une première unité d'addition (162), de [y] : = [y' + (ix + j)],

le calcul, par une deuxième unité de somme de produits (163), de [z'] : = [y($\zeta$y + b - k) + (c - l) x - m],

le calcul, par une deuxième unité d'addition (164), de [z] : = [z' + (ky + lx + m)],

le calcul, par une troisième unité de somme de produits (165), [w'/$\gamma$] : = [z($\alpha$z + d - n/y) + ($\beta$x + f - o/y)y + (g - p) x + (H - q)/$\gamma$],

le calcul, par une unité de multiplication de clé publique (166), [w']: = [w'/y] * $\gamma$ ; et le calcul, par une troisième unite d'addition (167), de [w] : = [w' + (nz+op+px+q)].

3. Appareil de calcul sécurisé ($I_n$) de la pluralité d'appareils de calcul sécurisés compris dans le système de calcul de fonction exponentielle sécurisée selon la revendication 1.

4. Programme comprenant des instructions qui, lorsqu'elles sont exécutées par un ordinateur, amènent l'ordinateur à réaliser, en tant qu'un des appareils de calcul sécurisés de la pluralité d'appareils de calcul sécurisés, le procédé selon la revendication 2.

SECURE EXPONENTIAL FUNCTION
COMPUTATION SYSTEM 100

9

COMMUNI-
CATION
NETWORK

$1_1$

SECURE
COMPUTATION
APPARATUS

. . . .

$1_N$

SECURE
COMPUTATION
APPARATUS

Fig. 1

Fig. 2

$[a'_0], ..., [a'_{u-1}]$           $1, f_0, 1, f_1, ..., 1, f_{u-1}$

~13

**SELECTIVE PRODUCT UNIT**

~131

CONDITION
INTEGRATION UNIT

$[a'_j a'_{j+1}]$

~132

TABLE CONVERSION
UNIT

$m'_{00}, m'_{01}, m'_{10}, m'_{11}$

~133

PUBLIC VALUE
MULTIPLICATION UNIT

$[a''_j]$    ~134

REAL NUMBER
MULTIPLICATION UNIT

$[A]$    ~135

SELECTION
MULTIPLICATION UNIT

$[A]$

**Fig. 3**

[a'$_\rho$]

16

EXPONENTIAL FUNCTION
CALCULATION UNIT

161

FIRST SUM-OF-
PRODUCTS UNIT

162

FIRST ADDITION UNIT

163

SECOND SUM-OF-
PRODUCTS UNIT

164

SECOND ADDITION UNIT

160

PARAMETER
STORAGE UNIT

165

THIRD SUM-OF-
PRODUCTS UNIT

166

PUBLIC VALUE
MULTIPLICATION UNIT

167

THIRD ADDITION UNIT

[w]

Fig. 4

SECURE EXPONENTIAL FUNCTION COMPUTATION METHOD

```
                    ┌──────────────┐
                    │    START     │
                    └──────────────┘
                           │      ⟿ S11
                           ▼
              ┌─────────────────────────────┐
              │  CALCULATE [a']:=[a]-μ       │
              └─────────────────────────────┘
                           │      ⟿ S12-1
                           ▼
              ┌─────────────────────────────┐
              │  GENERATE [a'_0], ..., [a'_{u-1}] │
              └─────────────────────────────┘
                           │      ⟿ S12-2
                           ▼
    ┌───────────────────────────────────────────────────────────┐
    │ GENERATE EXPONENTIAL PART f_i AND MANTISSA PART ε_i OF exp(2^{i-t}) │
    └───────────────────────────────────────────────────────────┘
                           │      ⟿ S13
                           ▼
         ┌────────────────────────────────────────────┐
         │  CALCULATE TOTAL PRODUCT [f'] OF [a'_i?f_i:1] │
         └────────────────────────────────────────────┘
                           │      ⟿ S14
                           ▼
         ┌────────────────────────────────────────────┐
         │  CALCULATE TOTAL PRODUCT [ε'] OF [a'_i?2^{ε_i}:1] │
         └────────────────────────────────────────────┘
                           │      ⟿ S15
                           ▼
              ┌─────────────────────────────┐
              │  CALCULATE [a'_ρ]:=[a']-Σ2^{i-t}[a'_i] │
              └─────────────────────────────┘
                           │      ⟿ S16
                           ▼
              ┌─────────────────────────────┐
              │  CALCULATE [w]:=[exp(a'_ρ)]  │
              └─────────────────────────────┘
                           │      ⟿ S17
                           ▼
              ┌─────────────────────────────┐
              │  CALCULATE [w][f'][ε']exp(μ) │
              └─────────────────────────────┘
                           │
                           ▼
                    ┌──────────────┐
                    │     END      │
                    └──────────────┘
```

Fig. 5

SELECTIVE PRODUCT CALCULATION

```
        ┌─────────────┐
        │    START    │
        └─────────────┘
               │
               │         S131
               ▼      ⟋
   ┌──────────────────────────┐
   │   CALCULATE [a'_j a'_{j+1}]  │
   └──────────────────────────┘
               │
               │              S132
               ▼          ⟋
 ┌─────────────────────────────────────┐
 │ GENERATE m'_{00}, m'_{01}, m'_{10}, AND m'_{11} │
 └─────────────────────────────────────┘
               │
               │          S133
               ▼       ⟋
      ┌────────────────────┐
      │   CALCULATE [a''_j]   │
      └────────────────────┘
               │
               │           S134
               ▼        ⟋
 ┌────────────────────────────────────────┐
 │ CALCULATE TOTAL PRODUCT [A] OF [a''_j]   │
 └────────────────────────────────────────┘
               │
               │        S135-1
               ▼     ⟋
          ╱─────────────╲
         ╱   IS u ODD     ╲        NO
         ╲   NUMBER?      ╱ ────────┐
          ╲─────────────╱           │
            │                       │
           YES      S135-2          │
            ▼    ⟋                  │
 ┌──────────────────────────────┐   │
 │ CALCULATE [A][a'_{u-1}?f_{u-1}:1] │   │
 └──────────────────────────────┘   │
            │                       │
            ◄───────────────────────┘
            │
            ▼
      ┌─────────────┐
      │     END     │
      └─────────────┘
```

Fig. 6

EXPONENTIAL FUNCTION CALCULATION USING EIGHTH DEGREE
POLYNOMIAL APPROXIMATION

START

~ S161

CALCULATE [y']:=[x(δx+a-i)-j]

~ S162

CALCULATE [y]:=[y'+(ix+j)]

~ S163

CALCULATE [z']:=[y(ζy+b-k)+(c-l)x-m]

~ S164

CALCULATE [z]:=[z'+(ky+lx+m)]

~ S165

CALCULATE [w'/γ]:=[z(αz+d-n/γ)+(βx+f-o/γ)y+(g-p)x+(H-q)/γ]

~ S166

CALCULATE [w']=[w'/γ]*γ

~ S167

CALCULATE [w]:=[w'+(nz+oy+px+q)]

END

Fig. 7

1000 COMPUTER

Fig. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAI IKARASHI**. Secure Real Number Operations for Secure AI -O(|p|)-Bit Communication and O(1)-Round Right Shift Protocol. *CSS2019*, 2019
- **IGARASHI et al.** Secure Real Number Operations for Secure A1 - 0(lpl)-Bit Communication and 0(1)-Round Right Shift Protocol. *PROCEEDINGS OF COMPUTER SECURITY SYMPOSIUM 2019*, 14 October 2019, 1557-1564

- **ABDELRAHAMAN ALY et al.** Benchmarking Privacy Preserving Scientific Operations. *IACR, INTERNATIONAL ASSOCIATION FOR CRYPTOLOGIC RESEARCH*, 03 April 2019, vol. 20190403 (061423), 1-21
- **RYO KIKUCHI** ; **DAI IKARASHI** ; **TAKAHIRO MATSUDA** ; **KOKI HAMADA** ; **KOJI CHIDA**. Efficient bit-decomposition and modulus-conversion protocols with an honest majority. *Proceedings of Information Security and Privacy - 23rd Australasian Conference (ACISP 2018)*, 11 July 2018, 64-82